# EUROPEAN PATENT APPLICATION

(11) **EP 4 530 106 A1**
(43) Date of publication of application: **02.04.2025**
(21) Application number: 24195570.7
(22) Date of filing: 21.08.2024
(51) Int. Cl.: B60K 11/02, H02K 5/20, H02K 9/19, H02K 11/33, F16H 57/04

(54) **VEHICLE DRIVING DEVICE**

(30) Priority: 25.08.2023 JP 2023137410; 31.05.2024 JP 2024088869
(71) Applicant: Aisin Corporation, Aichi 448-8650 (JP)
(72) Inventor: HATTORI, Nakatsune, Kariya, 448-8650 (JP); KITAGAWA, Rei, Kariya, 448-8650 (JP)
(74) Representative: Kramer Barske Schmidtchen Patentanwälte PartG mbB

(57) **Abstract**

A vehicle driving device (1) includes: a rotary electrical machine (10); an output member (30) configured to be drivingly coupled to a wheel (W); a power transmission mechanism (20) configured to transmit a driving force between the rotary electrical machine and the output member; an inverter module (40) configured to control driving of the rotary electrical machine; and a case (50) configured to accommodate the rotary electrical machine, the power transmission mechanism, and the inverter module. The case includes a first accommodating chamber (A1) in which the rotary electrical machine is accommodated, a second accommodating chamber (A2) in which the inverter module is accommodated, and a division wall (58, 52B) dividing the first accommodating chamber and the second accommodating chamber. An oil storage portion (R1) configured to store oil is formed in a lower portion of the first accommodating chamber. A first water passage (61) through which cooling water for cooling the inverter module flows is provided in the second accommodating chamber or the division wall. A second water passage (66) connected to the first water passage is provided in a region facing a lower surface of the rotary electrical machine in the case.

## Description

### TECHNICAL FIELD

This disclosure relates to a vehicle driving device.

### BACKGROUND DISCUSSION

A vehicle driving device is known, in which an accommodating chamber that accommodates a rotary electrical machine and an accommodating chamber that accommodates an inverter module are provided in one case. An example of such a vehicle driving device is disclosed in WO 2016/051535 (Reference 1).

In the vehicle driving device disclosed in Reference 1, a second accommodating chamber (inverter accommodating chamber 62) in which an inverter module (inverter 10) is accommodated is disposed above a first accommodating chamber (motor accommodating chamber 61) in which a rotary electrical machine (motor 30) is accommodated. Cooling water that flows through a water passage provided between a bottom portion of the second accommodating chamber and the inverter module and cools the inverter module also cools the rotary electrical machine.

However, the vehicle driving device disclosed in Reference 1 has a structure such that the cooling water cools an upper surface and a side surface of the rotary electrical machine via the case, and thus oil stored in the case cannot be cooled, and there is a possibility that the rotary electrical machine cannot be sufficiently cooled.

A need thus exists for a vehicle driving device capable of appropriately cooling both the rotary electrical machine and the inverter module.

### SUMMARY

According to an aspect of this disclosure, a vehicle driving device includes:
a rotary electrical machine;
an output member configured to be drivingly coupled to a wheel;
a power transmission mechanism configured to transmit a driving force between the rotary electrical machine and the output member;
an inverter module configured to control driving of the rotary electrical machine; and
a case configured to accommodate the rotary electrical machine, the power transmission mechanism, and the inverter module, in which
the case includes a first accommodating chamber in which the rotary electrical machine is accommodated, a second accommodating chamber in which the inverter module is accommodated, and a division wall dividing the first accommodating chamber and the second accommodating chamber,
an oil storage portion configured to store oil is formed in a lower portion of the first accommodating chamber,
a first water passage through which cooling water for cooling the inverter module flows is provided in the second accommodating chamber or the division wall, and
a second water passage connected to the first water passage is provided in a region facing a lower surface of the rotary electrical machine in the case.

According to this configuration, the inverter module can be appropriately cooled by the cooling water flowing through the first water passage, and the oil stored in the oil storage portion can be cooled by the cooling water flowing from the first water passage to the second water passage, and ultimately the rotary electrical machine can be appropriately cooled. Therefore, it is possible to provide the vehicle driving device capable of appropriately cooling both the rotary electrical machine and the inverter module.

Further features and advantages of the technique according to the disclosure will become clearer by the following description of exemplary and non-limiting embodiments with reference to the drawings.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a schematic diagram of a vehicle driving device according to a first embodiment;
FIG. 2 is a block diagram of a control system;
FIG. 3 is a cross-sectional view of the vehicle driving device;
FIG. 4 is a layout diagram of each space in the vehicle driving device;
FIG. 5 is a layout diagram of each space in the vehicle driving device;
FIG. 6 is a view of the vehicle driving device in an axial direction;
FIG. 7 is a schematic diagram of a cooling structure;
FIG. 8 is a cross-sectional view of a vehicle driving device according to a second embodiment;
FIG. 9 is a schematic diagram of a cooling structure;
FIG. 10 is a bottom view of a case; and
FIG. 11 is a view of a vehicle driving device in the axial direction according to another embodiment.

### DETAILED DESCRIPTION

### First Embodiment

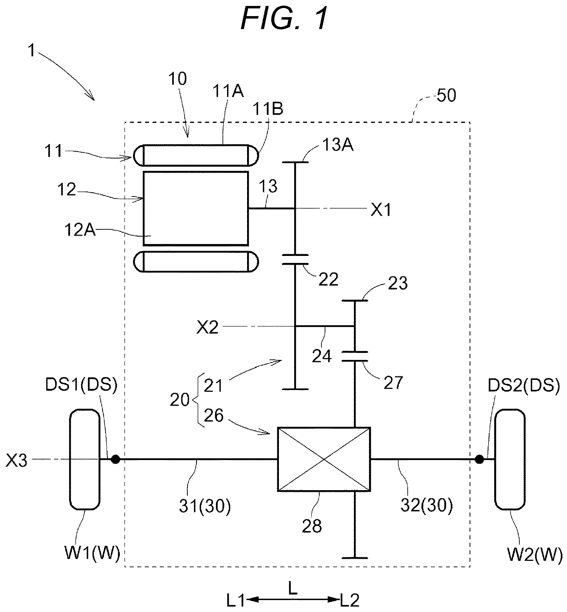

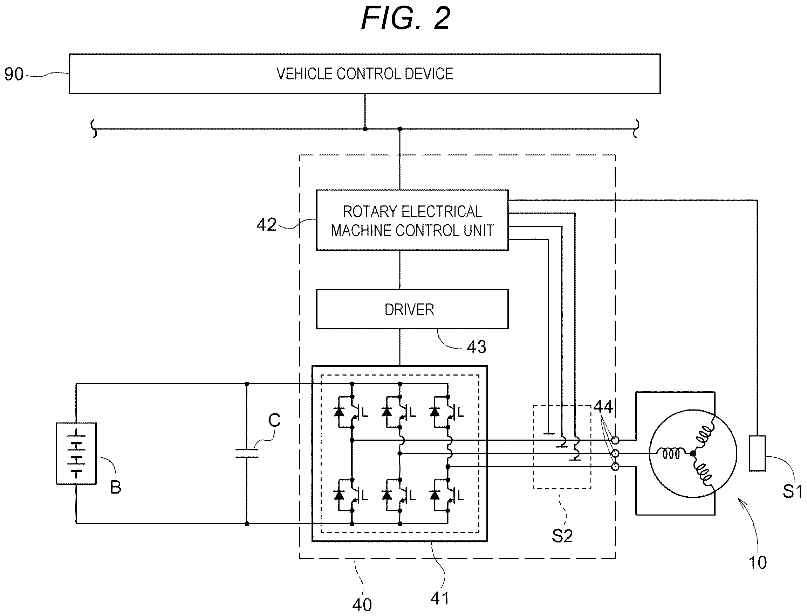

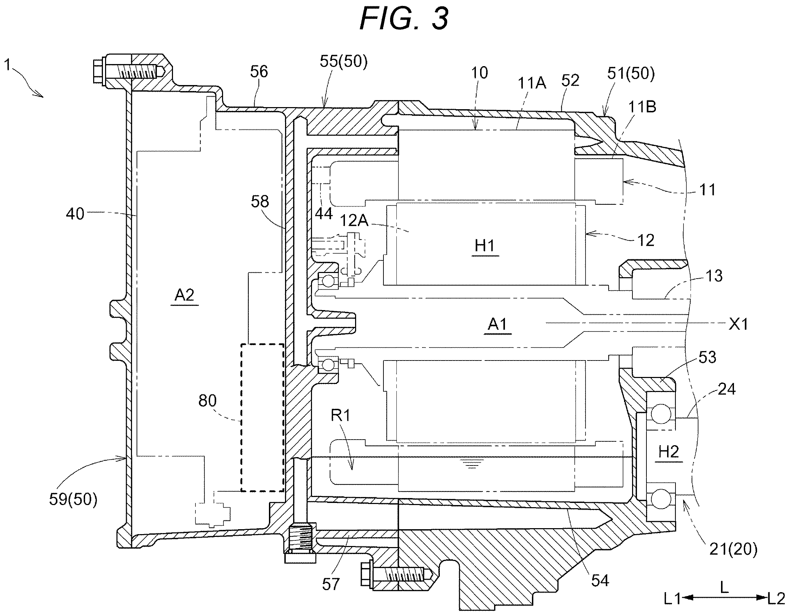

Hereinafter, a first embodiment of a vehicle driving device will be described with reference to the drawings. As shown in FIG. 1, a vehicle driving device 1 includes a rotary electrical machine 10, a power transmission mechanism 20, an output member 30 that is drivingly coupled to wheels W, and a case 50. In addition, as shown in FIGS. 2 and 3, the vehicle driving device 1 includes an inverter module 40 for driving and controlling the rotary electrical machine 10. The rotary electrical machine 10, the power transmission mechanism 20, the output member 30, and the inverter module 40 are accommodated in the case 50. A part of the output member 30 is exposed to an outside of the case 50.

In the present embodiment, the "rotary electrical machine" is used as a concept including any of a motor (electric motor), a generator (power generator), and a motor-generator that functions as both the motor and the generator as necessary.

In addition, "drivingly couple" means a state in which two rotary elements are coupled to be capable of transmitting a driving force. This concept includes a state in which two rotary elements are coupled to rotate integrally, and a state in which two rotary elements are coupled to be capable of transmitting a driving force via one or more transmission members. Such a transmission member may include various members (shaft, gear mechanism, belt, chain, and the like) that transmit rotation at the same speed or at different speeds, and may include an engagement device (friction engagement device, meshing engagement device, and the like) that selectively transmits the rotation and the driving force.

In the present embodiment, the rotary electrical machine 10 is disposed on a first axis X1. The power transmission mechanism 20 includes a counter gear mechanism 21 and a differential gear mechanism 26, the counter gear mechanism 21 is disposed on a second axis X2, and the differential gear mechanism 26 is disposed on a third axis X3. The output member 30 is disposed on the third axis X3. The first axis X1, the second axis X2, and the third axis X3 are parallel to one another, and in the present embodiment, a direction parallel thereto is referred to as an "axial direction L". In addition, one side in the axial direction L (in this example, a side on which the rotary electrical machine 10 is disposed with respect to the power transmission mechanism 20) is referred to as a "first side L1 in the axial direction", and the other side in the axial direction L (a side on which the power transmission mechanism 20 is disposed with respect to the rotary electrical machine 10), which is a side opposite thereto, is referred to as a "second side L2 in the axial direction".

The rotary electrical machine 10 includes a stator 11 fixed to the case 50, which is a non-rotary member, and a rotor 12 rotatably supported inward of the stator 11 in a radial direction. The stator 11 includes a stator core 11A, and a stator coil 11B wound around the stator core 11A. In addition, the rotor 12 includes a rotor core 12A, and a permanent magnet (not shown) fixed to the rotor core 12A.

The rotor 12 is coupled to a rotor shaft 13 to rotate integrally with the rotor shaft 13. The rotor shaft 13 is fitted to an inner side end portion of the rotor core 12A in the radial direction. The rotor shaft 13 is formed as a hollow shaft extending to the second side L2 in the axial direction. A rotary electrical machine output gear 13A is formed on an end portion of the rotor shaft 13 on the second side L2 in the axial direction. The rotary electrical machine output gear 13A meshes with a first counter gear 22 of the counter gear mechanism 21 constituting the power transmission mechanism 20. The rotor shaft 13 itself can also be regarded as a component constituting a part of the power transmission mechanism 20.

The power transmission mechanism 20 transmits the driving force between the rotary electrical machine 10 and the output member 30. The power transmission mechanism 20 according to the present embodiment includes the counter gear mechanism 21 drivingly coupled to the rotary electrical machine 10 and the differential gear mechanism 26 drivingly coupled to the counter gear mechanism 21.

The counter gear mechanism 21 includes the first counter gear 22, a second counter gear 23, and a counter shaft 24. The first counter gear 22 meshes with the rotary electrical machine output gear 13A. The second counter gear 23 meshes with a differential input gear 27 of the differential gear mechanism 26 constituting the power transmission mechanism 20. The counter shaft 24 couples the first counter gear 22 and the second counter gear 23.

The differential gear mechanism 26 includes the differential input gear 27 and a differential body portion 28. The differential input gear 27 meshes with the second counter gear 23. The differential body portion 28 includes a pinion and a side gear, both of which are bevel gears, and transmits rotation input to the differential input gear 27 to a pair of output members 30 (first output member 31 and second output member 32). The first output member 31 extends from the differential body portion 28 to the first side L1 in the axial direction, and is coupled to a first wheel W1 via a first driving shaft DS1. The second output member 32 extends from the differential body portion 28 to the second side L2 in the axial direction, and is coupled to a second wheel W2 via a second driving shaft DS2.

As shown in FIG. 2, the rotary electrical machine 10 is controlled based on a command from a vehicle control device 90 which is a host control device. The vehicle driving device 1 includes the inverter module 40 for actually controlling driving of the rotary electrical machine 10 in response to the command from the vehicle control device 90. The inverter module 40 according to the present embodiment is implemented by modularization of an inverter circuit 41, a rotary electrical machine control unit 42, and a driver 43.

The inverter circuit 41 includes a plurality of switching elements. The inverter circuit 41 includes a plurality of sets (here, three sets) of arms for one alternating current phase implemented by a series circuit of an upper stage side switching element on a positive electrode side and a lower stage side switching element on a negative electrode side of a direct current. Each switching element is provided with a freewheel diode with a direction from the negative electrode toward the positive electrode (a direction from the lower stage side to the upper stage side) as a forward direction.

As the switching element, a power semiconductor element such as an insulated gate bipolar transistor (IGBT), a power metal oxide semiconductor field effect transistor (MOSFET), a silicon carbide-metal oxide semiconductor FET (SiC-MOSFET), a sic-static induction transistor (SiC-SIT), and a gallium nitride-MOSFET (GaN-MOSFET) can be used.

The rotary electrical machine control unit 42 performs switching control on the plurality of switching elements constituting the inverter circuit 41 to convert DC power supplied from an in-vehicle battery B into AC power having a plurality of phases (three phases in the present embodiment). The rotary electrical machine control unit 42 performs current feedback control based on a rotation position of the rotor 12 (magnetic pole position of permanent magnet), a rotation speed of the rotor 12, and a current flowing through the stator coil 11B of each phase of the three phases. The rotation position of the rotor 12 is detected by a rotation sensor S1 such as a resolver or an inductive position sensor. The current flowing through the stator coil 11B is detected by a current sensor S2. In the present embodiment, the current sensor S2 is also included in the inverter module 40.

The driver 43 amplifies a voltage of a switching control signal output from the rotary electrical machine control unit 42, increases the driving force, and supplies the driving force to the inverter circuit 41.

In the present embodiment, a smoothing capacitor C that smooths the voltage of the inverter circuit 41 on a DC side is provided between the in-vehicle battery B and the inverter circuit 41. This example shows that the smoothing capacitor C is not included in the inverter module 40, but the smoothing capacitor C may also be included in the inverter module 40. In addition, a step-up converter may be provided, and in this case, the step-up converter may be included in the inverter module 40.

The inverter module 40 includes a plurality of (three in the present embodiment) connection terminals 44 corresponding to the stator coils 11B of the respective phases. The inverter module 40 is connected to the stator coils 11B of the respective phases via the plurality of connection terminals 44.

The case 50 accommodates the rotary electrical machine 10, the power transmission mechanism 20, a part of the output member 30, and the inverter module 40. As shown in FIG. 3, the case 50 according to the present embodiment includes a first case portion 51, a second case portion 55, and a cover portion 59. These portions are joined in the axial direction L. The first case portion 51 and the second case portion 55 are joined in the axial direction L, and the second case portion 55 and the cover portion 59 are joined in the axial direction L. The second case portion 55 is joined to the first case portion 51 from the first side L1 in the axial direction, and the cover portion 59 is joined to the second case portion 55 from the first side L1 in the axial direction.

The first case portion 51 includes at least a first peripheral wall 52 surrounding an outer periphery of the rotary electrical machine 10, and mainly accommodates the rotary electrical machine 10. Further, the first peripheral wall 52 surrounds outer peripheries of the counter gear mechanism 21 and the differential gear mechanism 26 constituting the power transmission mechanism 20, so that the first case portion 51 also accommodates the counter gear mechanism 21 and the differential gear mechanism 26. In the present embodiment, a part of the rotary electrical machine 10 (a part on the first side L1 in the axial direction) is accommodated in the second case portion 55, and at least a part of a first accommodating chamber A1 in which the rotary electrical machine 10 is accommodated is formed inside the first case portion 51. The counter gear mechanism 21 and the differential gear mechanism 26 are also accommodated in the first accommodating chamber A1.

In the present embodiment, the first accommodating chamber A1 is divided into a first accommodating space H1 in which the rotary electrical machine 10 is accommodated and a second accommodating space H2 in which a part of the power transmission mechanism 20 (a portion except for the rotor shaft 13) is accommodated. The first case portion 51 has an intermediate wall 53 extending in the radial direction of the first axis X1 on the second side L2 in the axial direction with respect to the rotary electrical machine 10. The intermediate wall 53 is formed integrally with the first peripheral wall 52. A through hole is formed in the intermediate wall 53, and the rotor shaft 13 is inserted through the through hole. The first accommodating chamber A1 is divided into the first accommodating space H1 and the second accommodating space H2 by the intermediate wall 53.

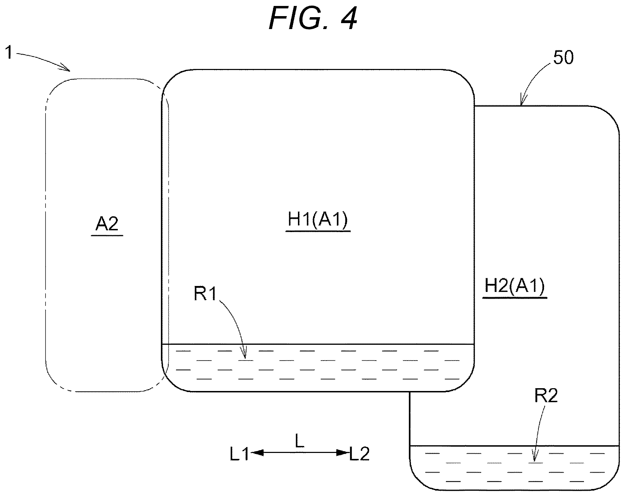

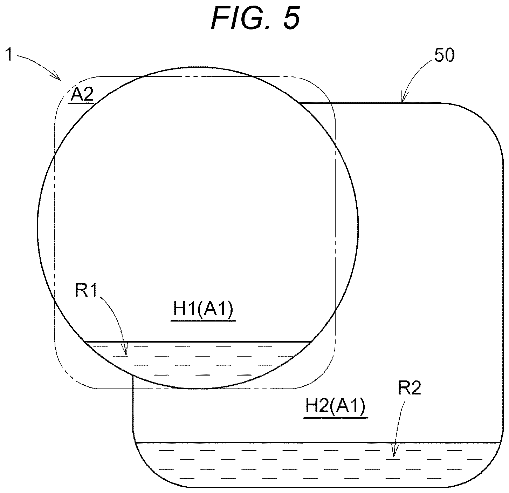

As shown in FIGS. 3 to 5, a first oil storage portion R1 that stores oil is formed in a lower portion of the first accommodating space H1 of the first accommodating chamber A1. The oil stored in the first oil storage portion R1 mainly cools the stator 11 (particularly, the stator coil 11B in this case). In the present embodiment, the first oil storage portion R1 corresponds to an "oil storage portion". In addition, as shown in FIGS. 4 and 5, a second oil storage portion R2 that stores oil is formed in a lower portion of the second accommodating space H2 of the first accommodating chamber A1. The oil stored in the second oil storage portion R2 is mainly scooped-up by the differential input gear 27 of the differential gear mechanism 26 to cool and lubricate the counter gear mechanism 21 and the differential gear mechanism 26.

In the present embodiment, the first case portion 51 has the intermediate wall 53, so that the first accommodating chamber A1 is divided into the first accommodating space H1 and the second accommodating space H2. Accordingly, an oil level height of the first oil storage portion R1 in the lower portion of the first accommodating space H1 and an oil level height of the second oil storage portion R2 in the lower portion of the second accommodating space H2 are different from each other.

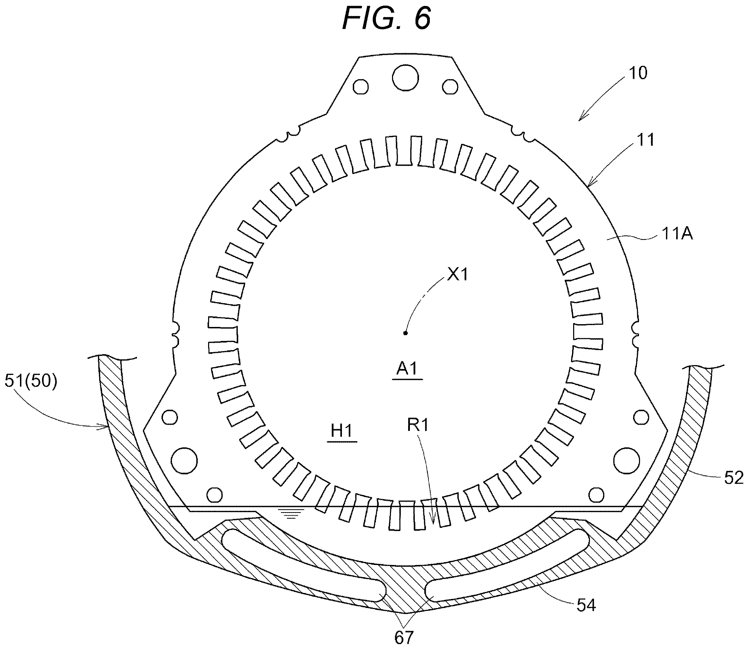

In addition, the first case portion 51 has a facing wall 54 in a region facing a lower surface of the rotary electrical machine 10 (stator 11). As shown in FIGS. 3 and 6, the facing wall 54 is formed as a curved wall portion extending in the axial direction L across a certain range in a circumferential direction of the rotary electrical machine 10. In the present embodiment, the facing wall 54 is formed as a portion which is a part of the first peripheral wall 52 thicker than other portions. The facing wall 54 and the stator 11 are in close contact with each other in the radial direction.

Facing wall inner water passages 67 are formed in the facing wall 54. In the present embodiment, a plurality of (two in this example) facing wall inner water passages 67 are formed side by side in the circumferential direction of the rotary electrical machine 10. The facing wall inner water passages 67 extend in the axial direction L across a certain range in the circumferential direction of the rotary electrical machine 10. When the case 50 is formed by casting, the facing wall inner water passages 67 can be formed by casting.

The second case portion 55 is joined to a side surface of the first case portion 51 on the first side L1 in the axial direction. The second case portion 55 includes at least a second peripheral wall 56 surrounding an outer periphery of the inverter module 40, and mainly accommodates the inverter module 40. The second peripheral wall 56 also surrounds an outer periphery of the smoothing capacitor C, and the second case portion 55 also accommodates the smoothing capacitor C. In the present embodiment, the second peripheral wall 56 surrounds a part of the outer periphery of the rotary electrical machine 10 (specifically, a portion of the stator coil 11B protruding from the stator core 11A to the first side L1 in the axial direction), and the second case portion 55 also accommodates a part of the rotary electrical machine 10.

In this manner, a part of the above-described first accommodating chamber A1 and the second accommodating chamber A2 in which the inverter module 40 is accommodated are formed inside the second case portion 55. The second case portion 55 has a division wall 58 extending in the radial direction of the first axis X1 on the first side L1 in the axial direction with respect to the rotary electrical machine 10. The division wall 58 is formed integrally with the second peripheral wall 56. An inside of the second case portion 55 is divided into the first accommodating chamber A1 and the second accommodating chamber A2 by the division wall 58.

In the present embodiment, the connection terminals 44 of the inverter module 40 that are connected to the rotary electrical machine 10 penetrate the division wall 58. The connection terminals 44 penetrate the division wall 58 to be disposed across the first accommodating chamber A1 and the second accommodating chamber A2, and allow the first accommodating chamber A1 and the second accommodating chamber A2 to directly communicate with each other in the axial direction L. Therefore, the inverter module 40 and the rotary electrical machine 10 can be electrically connected to each other via a nearly shortest path. The plurality of connection terminals 44 are disposed side by side along the division wall 58. In the present embodiment, a plurality of types of wire harnesses (for example, resolver wiring, control wiring and power wiring of an electric oil pump, and thermistor wiring for coil temperature detection) also penetrate the division wall 58.

The second case portion 55 has a communication wall 57 that connects the division wall 58 and the facing wall 54 of the first case portion 51. Similarly to the facing wall 54, the communication wall 57 is formed as a curved wall portion extending in the axial direction L across a certain range in the circumferential direction of the rotary electrical machine 10. When the first case portion 51 and the second case portion 55 are joined to each other, the communication wall 57 and the facing wall 54 are integrated together without a seam in the axial direction L. The above-described facing wall inner water passages 67 are also formed in the communication wall 57, and are continuous across the communication wall 57 and the facing wall 54.

The cover portion 59 is joined to a side surface of the second case portion 55 on the first side L1 in the axial direction. The cover portion 59 according to the present embodiment is formed in a flat plate shape extending substantially along the radial direction. The second accommodating chamber A2 is constituted by a space surrounded by the cover portion 59, the second peripheral wall 56 of the second case portion 55, and the division wall 58 of the second case portion 55.

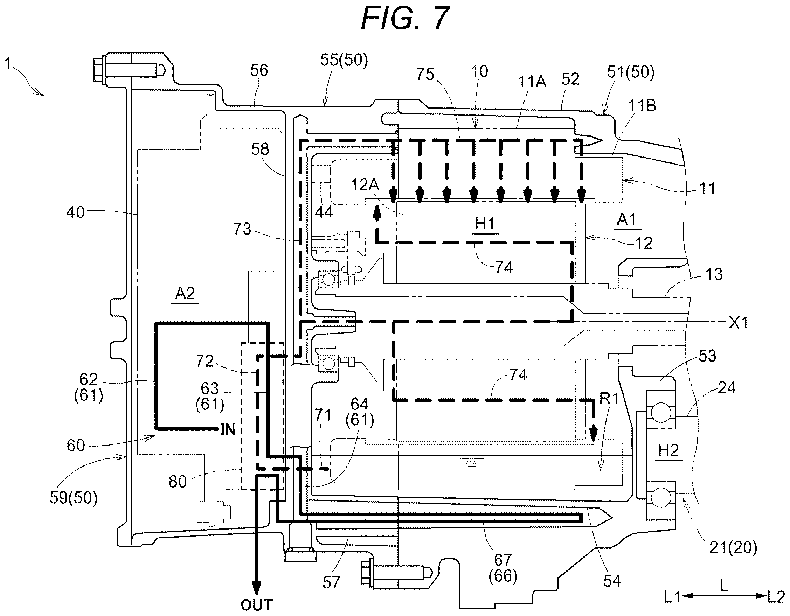

Hereinafter, a cooling mechanism for cooling the rotary electrical machine 10 and the inverter module 40 will be described. As shown in FIG. 7, the cooling mechanism of the rotary electrical machine 10 and the inverter module 40 according to the present embodiment includes a cooling water path 60 that circulates cooling water, an oil path 70 that circulates oil, and a heat exchanger 80 that performs heat exchange between the cooling water and the oil.

The cooling water discharged from a water pump (not shown) is supplied to the cooling water path 60 through an external hose (not shown, either). The cooling water path 60 according to the present embodiment includes a first water passage 61 for mainly cooling the inverter module 40 and a second water passage 66 for mainly cooling the rotary electrical machine 10. The first water passage 61 is connected downstream of the water pump and the external hose, and the second water passage 66 is connected downstream of the first water passage 61.

In the present embodiment, the first water passage 61 is provided across the second accommodating chamber A2 and the division wall 58. The first water passage 61 according to the present embodiment includes a module inner water passage 62, a heat exchange water passage 63, and a division wall inner water passage 64. The heat exchange water passage 63 is connected downstream of the module inner water passage 62, and the division wall inner water passage 64 is connected downstream of the heat exchange water passage 63.

The module inner water passage 62 is a water passage formed in the inverter module 40 disposed in the second accommodating chamber A2. For example, the module inner water passage 62 is formed in the inverter module 40 such that the cooling water flows along a heat sink thermally connected to the plurality of switching elements constituting the inverter circuit 41. Accordingly, it is possible to favorably cool the switching elements having a relatively large amount of heat generation during traveling of the vehicle.

The heat exchange water passage 63 is a water passage formed in the heat exchanger 80 disposed in the second accommodating chamber A2. The heat exchange water passage 63 is disposed parallel to a heat exchange oil passage 72 constituting the oil path 70 in the heat exchanger 80. In the present embodiment, the cooling water flowing through the heat exchange water passage 63 cools the oil flowing through the heat exchange oil passage 72 by the heat exchange in the heat exchanger 80.

The division wall inner water passage 64 is a water passage formed in the division wall 58. The division wall inner water passage 64 is formed in a lower region of the division wall 58. The division wall inner water passage 64 extends from a cooling water outlet in the heat exchanger 80 to a vicinity of the communication wall 57.

The second water passage 66 is provided in a region facing the lower surface of the rotary electrical machine 10 in the first case portion 51 and the second case portion 55. The second water passage 66 is provided in a region facing a surface of the stator 11 facing downward (that is, a surface of an outer periphery surface of the stator 11 below the first axis X1). The terms "upper" and "lower" refer to upper and lower when the vehicle driving device 1 is mounted on a vehicle.

The second water passage 66 according to the present embodiment includes the facing wall inner water passages 67. The facing wall inner water passages 67 are connected downstream of the division wall inner water passage 64. The facing wall inner water passages 67 extend along the axial direction L across the communication wall 57 of the second case portion 55 and the facing wall 54 of the first case portion 51. The oil stored in the first oil storage portion R1 can be cooled by the cooling water flowing through the facing wall inner water passages 67, and the stator core 11A can be cooled by the cooled oil.

Further, in the present embodiment, since the facing wall 54 in which the facing wall inner water passages 67 are formed is in contact with the stator core 11A, the stator core 11A can be directly cooled by the facing wall 54 cooled by the cooling water.

The oil path 70 is provided in the case 50. In the present embodiment, the oil path 70 is mainly provided in the second case portion 55. The oil path 70 includes a suction oil passage 71, the heat exchange oil passage 72, a division wall inner oil passage 73, a first supply oil passage 74, and a second supply oil passage 75. An oil pump (specifically, an electric oil pump) (not shown) is connected downstream of the suction oil passage 71, and the heat exchange oil passage 72 is connected downstream of the oil pump. The division wall inner oil passage 73 is connected downstream of the heat exchange oil passage 72, and the first supply oil passage 74 and the second supply oil passage 75 are connected in parallel to each other downstream of the division wall inner oil passage 73.

The suction oil passage 71 communicates with the first oil storage portion R1 formed in the lower portion of the first accommodating space H1 of the first accommodating chamber A1. The oil stored in the first oil storage portion R1 is suctioned into the oil pump through the suction oil passage 71.

The heat exchange oil passage 72 is an oil passage formed in the heat exchanger 80 disposed in the second accommodating chamber A2. The heat exchange oil passage 72 is disposed parallel to the heat exchange water passage 63 constituting the cooling water path 60 in the heat exchanger 80. In the present embodiment, the oil flowing through the heat exchange oil passage 72 is cooled by the heat exchange in the heat exchanger 80 with the cooling water flowing through the heat exchange water passage 63.

The division wall inner oil passage 73 is an oil passage formed in the division wall 58. The division wall inner oil passage 73 is formed in a region from a vicinity of a center portion of the division wall 58 to an upper side. The division wall inner oil passage 73 extends from an oil outlet in the heat exchanger 80 to a vicinity of the second peripheral wall 56. The division wall inner oil passage 73 is formed at a position in the circumferential direction different from that of the division wall inner water passage 64 formed in the same division wall 58.

The first supply oil passage 74 is formed inside the rotor shaft 13 and inside the rotor 12 (rotor core 12A) from a vicinity of a center of the division wall 58 in the division wall inner oil passage 73. The oil flowing through the first supply oil passage 74 cools the rotor core 12A and the permanent magnet, and rains incessantly inward in the radial direction to a portion (coil end) of the stator coil 11B protruding in the axial direction L from the stator core 11A to cool the corresponding portion.

The second supply oil passage 75 extends along the axial direction L from a vicinity of an upper end of the division wall 58 in the division wall inner oil passage 73. The oil flowing through the second supply oil passage 75 cools the stator core 11A when flowing down along an outer surface of the stator 11 (stator core 11A).

The oil by which the rotary electrical machine 10 is cooled through the first supply oil passage 74 and the second supply oil passage 75 is collected and stored again in the first oil storage portion R1 formed in the lower portion of the first accommodating space H1. The oil is suctioned into the oil pump through the suction oil passage 71, and circulates in the oil path 70.

The heat exchanger 80 performs the heat exchange between the cooling water flowing through the cooling water path 60 (heat exchange water passage 63) and the oil flowing through the oil path 70 (heat exchange oil passage 72). The heat exchanger 80 according to the present embodiment is also a so-called oil cooler, and cools the oil flowing through the oil path 70 by the heat exchange with an external refrigerant (for example, coolant liquid, and external air). The heat exchanger 80 is disposed in the second accommodating chamber A2. The heat exchanger 80 is in contact with the division wall 58 at a lower portion of the second accommodating chamber A2.

In the present embodiment, since the rotary electrical machine 10 can be favorably cooled by both water cooling and oil cooling, the low-grade stator coil 11B or a low-grade permanent magnet can be used. Accordingly, cost reduction can be achieved.

Further, since the inverter module 40 is adjacent to the rotary electrical machine 10 in the axial direction L, it is possible to increase a degree of freedom in disposing the external hose to the cooling water path 60 without increasing a size of the vehicle driving device 1 in an upper-lower direction. Further, the plurality of connection terminals 44 can penetrate the division wall 58, and a connection between the inverter module 40 and the rotary electrical machine 10 can be shortened.

Further, since the heat exchanger 80 is provided in the second accommodating chamber A2, an intermediate hose necessary for an external structure is not necessary, and the cooling water path 60 and the oil path 70 can be simplified.

As described above, the vehicle driving device 1 according to the first embodiment includes:
the rotary electrical machine 10;
the output member 30 configured to be drivingly coupled to the wheel W;
the power transmission mechanism 20 configured to transmit the driving force between the rotary electrical machine 10 and the output member 30;
the inverter module 40 configured to control the driving of the rotary electrical machine 10; and
the case 50 configured to accommodate the rotary electrical machine 10, the power transmission mechanism 20, and the inverter module 40, in which
the case 50 includes the first case portion 51 that constitutes at least a part of the first accommodating chamber A1 in which the rotary electrical machine 10 is accommodated, and the second case portion 55 joined to the side surface of the first case portion 51,
the second case portion 55 constitutes at least a part of the second accommodating chamber A2 in which the inverter module 40 is accommodated, and includes the division wall 58 that divides the first accommodating chamber A1 and the second accommodating chamber A2,
the first oil storage portion R1 configured to store the oil is formed in the lower portion of the first accommodating chamber A1,
the first water passage 61 through which the cooling water for cooling the inverter module 40 flows is provided in the second accommodating chamber A2 or the division wall 58, and
the second water passage 66 connected to the first water passage 61 is provided in the region facing the lower surface of the rotary electrical machine 10 in the first case portion 51.

According to this configuration, since the second case portion 55 constituting at least a part of the second accommodating chamber A2 is joined to the side surface of the first case portion 51, it is possible to reduce the size of the vehicle driving device 1 in the upper-lower direction. In addition, the inverter module 40 can be appropriately cooled by the cooling water flowing through the first water passage 61, the oil stored in the first oil storage portion R1 can be cooled by the cooling water flowing from the first water passage 61 to the second water passage 66, and ultimately the rotary electrical machine 10 can be appropriately cooled. Accordingly, it is possible to provide the vehicle driving device 1 capable of appropriately cooling the rotary electrical machine 10 and the inverter module 40 while achieving a reduction in the size in the upper-lower direction.

In one aspect,
the oil path 70 through which the oil circulates is preferably provided in the case 50, and
the heat exchanger 80 that performs the heat exchange between the cooling water and the oil is preferably disposed in the second accommodating chamber A2.

According to this configuration, as compared with a configuration in which the heat exchanger 80 is disposed outside the case 50, an external pipe for connecting the case 50 and the heat exchanger 80 is not necessary, and thus a flow path of the cooling water and a flow path of the oil can be simplified.

In one aspect,
the first accommodating chamber A1 is preferably provided with the intermediate wall 53 that divides the first accommodating space H1 in which the rotary electrical machine 10 is accommodated and the second accommodating space H2 in which a part of the power transmission mechanism 20 is accommodated.

According to this configuration, the oil is retained in the lower portion of the first accommodating space H1 in which the rotary electrical machine 10 is accommodated by the intermediate wall 53, the oil can be efficiently cooled by the cooling water flowing through the second water passage 66, and ultimately the rotary electrical machine 10 can be efficiently cooled. Further, a suitable oil level height can be individually set for each of the first accommodating space H1 in which the rotary electrical machine 10 is accommodated and the second accommodating space H2 in which a part of the power transmission mechanism 20 is accommodated.

In one aspect,
the plurality of connection terminals 44 of the inverter module 40 that are connected to the rotary electrical machine 10 are preferably disposed side by side along the division wall 58.

According to this configuration, it is possible to shorten an electrical connection member for electrically connecting the inverter module 40 and the rotary electrical machine 10.

### Second Embodiment

Hereinafter, a second embodiment of the vehicle driving device will be described with reference to the drawings. The vehicle driving device 1 according to the present embodiment is mainly different from that of the first embodiment in a specific configuration of the case 50 and an arrangement configuration of the inverter module 40. Hereinafter, the vehicle driving device 1 according to the present embodiment will be described mainly on differences from that of the first embodiment. Note that points that are not particularly specified are the same as in the first embodiment and are denoted by the same reference numerals, and a detailed description thereof is omitted.

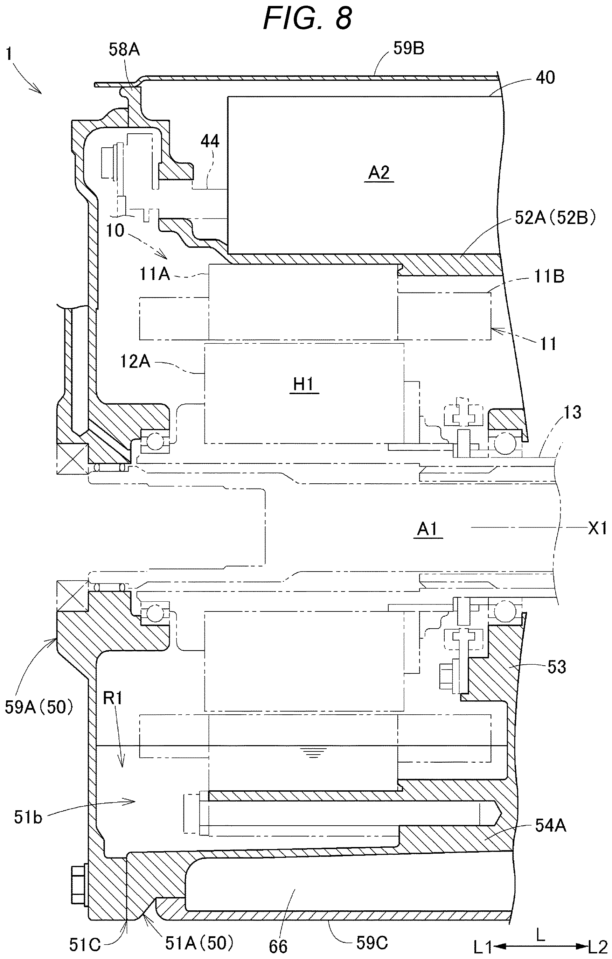

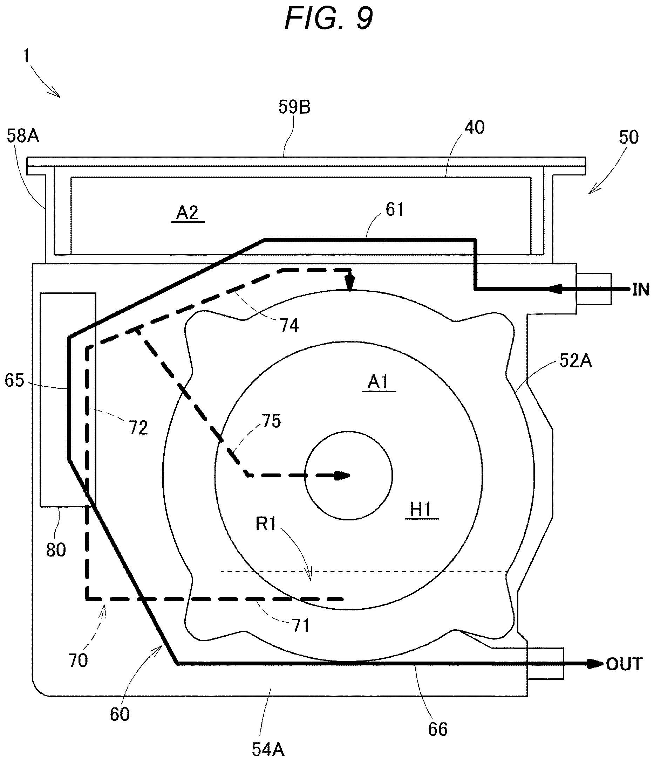

In the present embodiment, as shown in FIGS. 8 and 9, the case 50 that accommodates the rotary electrical machine 10, the power transmission mechanism 20, a part of the output member 30, and the inverter module 40 includes a case body portion 51A and a cover portion 59A. While the case 50 according to the first embodiment includes the first case portion 51, the second case portion 55, and the cover portion 59, the case 50 according to the present embodiment includes the case body portion 51A in which portions other than the cover portion 59A are integrated. The case body portion 51A and the cover portion 59A are joined in the axial direction L.

The case body portion 51A includes a peripheral wall 52A surrounding at least the outer periphery of the rotary electrical machine 10, and accommodates the rotary electrical machine 10. The case body portion 51A includes the first accommodating chamber A1 inside the peripheral wall 52A. Further, the peripheral wall 52A surrounds the outer peripheries of the counter gear mechanism 21 and the differential gear mechanism 26 constituting the power transmission mechanism 20, so that the case body portion 51A also accommodates the counter gear mechanism 21 and the differential gear mechanism 26. The counter gear mechanism 21 and the differential gear mechanism 26 are also accommodated in the first accommodating chamber A1.

The case body portion 51A includes an opening portion 51b that opens toward the axial direction L (specifically, the first side L1 in the axial direction). The cover portion 59A is joined to the case body portion 51A to cover the opening portion 51b of the case body portion 51A. The cover portion 59A is joined to the case body portion 51A from the first side L1 in the axial direction. A joining portion 51C (mating surface; see FIG. 8) between the case body portion 51A and the cover portion 59A is generally formed in an annular shape slightly larger than an outer shape of the rotary electrical machine 10. Although not shown, another cover portion is also joined to the case body portion 51A from the second side L2 in the axial direction.

The case body portion 51A includes a box-shaped portion 58A that opens upward at a position adjacent to an upper side of the peripheral wall 52A. The box-shaped portion 58A is formed in a box shape including a bottom surface portion and a side wall portion surrounding the bottom surface portion. The inverter module 40 is accommodated inside the box-shaped portion 58A. The case body portion 51A includes the second accommodating chamber A2 inside the box-shaped portion 58A. The second accommodating chamber A2 is adjacent to and above the peripheral wall 52A of the case body portion 51A. A part of the peripheral wall 52A (upper side portion) also functions as a division wall 52B that divides the first accommodating chamber A1 and the second accommodating chamber A2.

An upper opening of the box-shaped portion 58A is covered with an inverter cover 59B joined to the box-shaped portion 58A from above.

In the present embodiment, as shown in FIG. 8, the connection terminals 44 of the inverter module 40 are disposed in the case 50 to penetrate the case body portion 51A (the box-shaped portion 58A in the shown example).

The vehicle driving device 1 according to the present embodiment also includes a cooling mechanism of the rotary electrical machine 10 and the inverter module 40. As shown in FIG. 9, the cooling mechanism includes the cooling water path 60 that circulates the cooling water, the oil path 70 that circulates the oil, and the heat exchanger 80 that performs the heat exchange between the cooling water and the oil.

The cooling water path 60 includes the first water passage 61 for mainly cooling the inverter module 40, the second water passage 66 for mainly cooling the rotary electrical machine 10, and a communication water passage 65 that connects the first water passage 61 and the second water passage 66.

The first water passage 61 passes through the second accommodating chamber A2 disposed above the rotary electrical machine 10. For example, the first water passage 61 is formed in the inverter module 40 such that the cooling water flows along the heat sink thermally connected to the plurality of switching elements constituting the inverter circuit 41. The switching elements included in the inverter module 40 can be favorably cooled by the cooling water flowing through the first water passage 61. The first water passage 61 penetrates the bottom surface portion of the box-shaped portion 58A and communicates with a lower portion of the box-shaped portion 58A.

The communication water passage 65 is connected downstream of the first water passage 61. In the present embodiment, the heat exchanger 80 is disposed in a vertically placed position below the box-shaped portion 58A and on a lateral side of the peripheral wall 52A. The communication water passage 65 passes through the inside of the heat exchanger 80, and the cooling water flowing through the communication water passage 65 cools the oil flowing through the heat exchange oil passage 72 by the heat exchange in the heat exchanger 80. The communication water passage 65 extends downward from a lower portion of the heat exchanger 80 toward a lower portion of the case body portion 51A.

A portion of the communication water passage 65 upstream of the heat exchanger 80 extends away from an axial center of the rotary electrical machine 10 in a width direction (direction orthogonal to the axial direction L) as extending downward. A portion of the communication water passage 65 passing through the inside of the heat exchanger 80 extends downward. A portion of the communication water passage 65 downstream of the heat exchanger 80 extends close to the axial center of the rotary electrical machine 10 in the width direction as extending downward. In this manner, the communication water passage 65 is provided along the peripheral wall 52A on the lateral side of the peripheral wall 52A. Note that the communication water passage 65 does not need to be provided exactly along the peripheral wall 52A, and may be provided substantially along the peripheral wall 52A.

The second water passage 66 is connected downstream of the communication water passage 65. The second water passage 66 is provided in a region facing the lower surface of the rotary electrical machine 10 in the case body portion 51A. The second water passage 66 is provided in a facing wall 54A which is the region facing the surface of the stator 11 facing downward (that is, the surface on the lower side of the first axis X1 on an outer periphery surface of the stator 11). The oil stored in the first oil storage portion R1 can be cooled by the cooling water flowing through the second water passage 66, and the rotary electrical machine 10 (stator core 11A) can be cooled by the cooled oil. Further, the facing wall 54A in which the second water passage 66 is formed is in contact with the stator core 11A, so that the stator core 11A can be directly cooled by the facing wall 54A cooled by the cooling water.

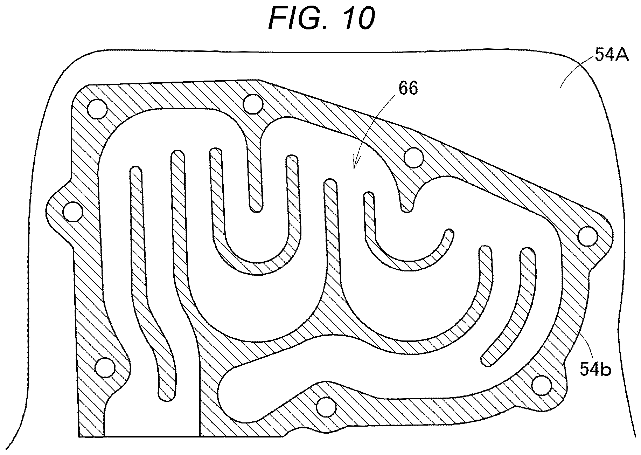

In the present embodiment, the second water passage 66 is provided between the facing wall 54A and a water passage cover 59C joined thereto. As shown in FIG. 10 in which the vehicle driving device 1 is viewed from below, when the facing wall 54A includes a flat portion 54b, the second water passage 66 may be formed between the facing wall 54A and the water passage cover 59C by forming a groove in the flat portion 54b. The flat portion 54b functions as a mating surface with the water passage cover 59C. In this case, the entire water passage cover 59C may be formed flat, or a groove having the same shape may also be formed on a side of the water passage cover 59C to form the second water passage 66 across the facing wall 54A and the water passage cover 59C.

Such a configuration is suitable for forming the second water passage 66 having a relatively complicated shape since the second water passage 66 can be formed by, for example, machining. In the example of FIG. 10, the second water passage 66 (groove) is formed in a labyrinth shape by a combination of a plurality of branch portions and a plurality of meandering portions. In this manner, a flow velocity of the cooling water flowing through the second water passage 66 can be increased. Accordingly, cooling efficiency of the oil stored in the first oil storage portion R1 can be increased, and ultimately cooling efficiency of the rotary electrical machine 10 can be increased.

As shown in FIG. 8, the second water passage 66 is provided in a region overlapping the joining portion 51C between the case body portion 51A and the cover portion 59A when viewed in the axial direction L. The second water passage 66 is provided in a region overlapping a portion of the joining portion 51C located below the rotary electrical machine 10 when viewed in the axial direction L. In the present embodiment, the second water passage 66 is disposed above a lower end of the joining portion 51C between the case body portion 51A and the cover portion 59A. In this manner, it is possible to appropriately cool both the rotary electrical machine 10 and the inverter module 40 while avoiding an increase in the size of the vehicle driving device 1 in the upper-lower direction (particularly, an increase in the size downward).

As described above, the vehicle driving device 1 according to the second embodiment includes:
the rotary electrical machine 10;
the output member 30 configured to be drivingly coupled to the wheel W;
the power transmission mechanism 20 configured to transmit the driving force between the rotary electrical machine 10 and the output member 30;
the inverter module 40 configured to control driving of the rotary electrical machine 10; and
the case 50 configured to accommodate the rotary electrical machine 10, the power transmission mechanism 20, and the inverter module 40, in which
the case 50 includes the first accommodating chamber A1 in which the rotary electrical machine 10 is accommodated, the second accommodating chamber A2 in which the inverter module 40 is accommodated, and the division wall 52B that divides the first accommodating chamber A1 and the second accommodating chamber A2,
the first oil storage portion R1 configured to store oil is formed in the lower portion of the first accommodating chamber A1,
the first water passage 61 through which the cooling water for cooling the inverter module 40 flows is provided in the second accommodating chamber A2, and
the second water passage 66 connected to the first water passage 61 is provided in the region facing the lower surface of the rotary electrical machine 10 in the case 50.

According to this configuration, the inverter module 40 can be appropriately cooled by the cooling water flowing through the first water passage 61, and the oil stored in the first oil storage portion R1 can be cooled by the cooling water flowing from the first water passage 61 to the second water passage 66, and ultimately the rotary electrical machine 10 can be appropriately cooled. Therefore, it is possible to provide the vehicle driving device 1 capable of appropriately cooling both the rotary electrical machine 10 and the inverter module 40.

In one aspect,
the case 50 preferably includes the case body portion 51A, the case body portion 51A constituting at least a part of the first accommodating chamber A1 and including the opening portion 51b that opens in the axial direction L, and the cover portion 59A that is joined to the case body portion 51A to cover the opening portion 51b, and
the second water passage 66 is preferably disposed above the lower end of the joining portion 51C between the case body portion 51A and the cover portion 59A.

According to this configuration, the second water passage 66 is provided, so that it is easy to prevent the increase in the size of the vehicle driving device 1 in the upper-lower direction.

In one aspect,
the second accommodating chamber A2 is preferably adjacent to the peripheral wall 52A of the case body portion 51A constituting at least a part of the first accommodating chamber A1, and
the communication water passage 65 connecting the first water passage 61 and the second water passage 66 is preferably provided along the peripheral wall 52A.

According to this configuration, the cooling water that cools the inverter module 40 when flowing through the first water passage 61 can be guided to the second water passage 66 via a rational path. Accordingly, it is possible to appropriately cool the oil stored in the first oil storage portion R1 and the rotary electrical machine 10 while avoiding the increase in the size of the vehicle driving device 1.

In one aspect,
the second water passage 66 is preferably formed in the labyrinth shape.

According to this configuration, the flow velocity of the cooling water flowing through the second water passage 66 can be increased, the cooling efficiency of the oil stored in the first oil storage portion R1 can be increased, and ultimately the cooling efficiency of the rotary electrical machine 10 can be increased.

### Other Embodiments

(1) In each of the embodiments described above, the configuration in which the facing wall 54 and the stator 11 are in close contact with each other in the radial direction is described as an example. However, the disclosure is not limited to such a configuration, and a gap in the radial direction may be provided between the facing wall 54 and the stator 11.
(2) In the first embodiment described above, the configuration in which the second water passage 66 (facing wall inner water passage 67) is formed across the communication wall 57 of the second case portion 55 and the facing wall 54 of the first case portion 51 is described as an example. However, the disclosure is not limited to such a configuration, and the second water passage 66 may be formed in only one of the first case portion 51 and the second case portion 55. In this case, while belonging to any one of the first case portion 51 and the second case portion 55, a portion corresponding to the facing wall 54 and a portion corresponding to the communication wall 57 may be integrally formed, and the second water passage 66 may be formed inside the portion.

In this manner,
the second water passage connected to the first water passage is provided in the region facing the lower surface of the rotary electrical machine in at least one of the first case portion and the second case portion.

(3) In the first embodiment described above, the configuration in which the first accommodating chamber A1 is formed by cooperation of the first case portion 51 and the second case portion 55 is described as an example. However, the disclosure is not limited to such a configuration, and for example, the first accommodating chamber A1 may be formed only in the first case portion 51.

(4) In the first embodiment described above, the configuration in which the second accommodating chamber A2 is formed only in the second case portion 55 is described as an example. However, the disclosure is not limited to such a configuration, and for example, the second accommodating chamber A2 may be formed by cooperation of the second case portion 55 and a bowl-shaped third case portion used instead of the cover portion 59.

(5) In each of the embodiments described above, the configuration is described as an example in which the first case portion 51 or the case body portion 51A includes the intermediate wall 53 that divides the first accommodating space H1 in which the rotary electrical machine 10 is accommodated and the second accommodating space H2 in which a part of the power transmission mechanism 20 is accommodated. The intermediate wall 53 may completely divide the first accommodating space H1 and the second accommodating space H2, or may incompletely divide the first accommodating space H1 and the second accommodating space H2 to an extent that the oil in the first accommodating chamber A1 can be divided into parts. Further, the first case portion 51 or the case body portion 51A may not include the intermediate wall 53, and the rotary electrical machine 10 and the power transmission mechanism 20 may be accommodated in an integrated space.

(6) In the first embodiment described above, the configuration in which the connection terminals 44 of the inverter module 40 are disposed inside the case 50 to penetrate the division wall 58 is described as an example. However, the disclosure is not limited to such a configuration, and for example, the connection terminals 44 may penetrate the second peripheral wall 56 and be exposed to outside of the case 50. Further, in the configuration of the second embodiment, the connection terminals 44 of the inverter module 40 may be disposed inside the case 50 to penetrate a portion of the peripheral wall 52A that also serves as the division wall 52B.

(7) In each of the embodiments described above, the configuration in which the portion for cooling the plurality of switching elements constituting the inverter circuit 41 is formed in the inverter module 40 is described as an example. However, the disclosure is not limited to such a configuration, and for example, the portion for cooling the switching elements may be formed in a portion that also serves as the division wall 58 or the division wall 52B of the peripheral wall 52A.

(8) In the first embodiment described above, the configuration in which the heat exchanger 80 is disposed in the second accommodating chamber A2 is described as an example. However, the disclosure is not limited to such a configuration, and for example, the heat exchanger 80 may be formed in the division wall 58. That is, the heat exchange water passage 63 and the heat exchange oil passage 72 may be formed inside the division wall 58 to flow in directions opposite to each other, and the corresponding portion may function as the heat exchanger 80. In the configuration of the second embodiment, the heat exchanger 80 may be formed in the portion of the peripheral wall 52A that also serves as the division wall 52B.

As described above,
it is preferable that the heat exchanger 80 that performs the heat exchange between the cooling water and the oil is disposed in the second accommodating chamber A2, or is formed in the division wall 58 or the division wall 52B.

(9) In the first embodiment described above, the configuration in which the heat exchanger 80 is disposed in the case 50 is described as an example. However, the disclosure is not limited to such a configuration, and for example, the heat exchanger 80 may be exposed to outside of the case 50.

(10) In each of the embodiments described above, the configuration in which the cooling water flows through the second water passage 66 after flowing through the first water passage 61 is described as an example. However, the disclosure is not limited to such a configuration, and the cooling water may flow through the first water passage 61 after flowing through the second water passage 66.

(11) In the first embodiment described above, the configuration in which the first case portion 51 and the second case portion 55 are integrally formed is described as an example. However, the disclosure is not limited to such a configuration, and at least one of the first case portion 51 and the second case portion 55 may be implemented by a combination of a plurality of members.

(12) In the first embodiment described above, the configuration in which the second case portion 55 is joined to the side surface of the first case portion 51 in the axial direction L is described as an example. However, the disclosure is not limited to such a configuration, and for example, the second case portion 55 may be joined to a side surface of the first case portion 51 in a direction orthogonal to the axial direction L (more specifically, a direction orthogonal to both the axial direction L and the upper-lower direction).

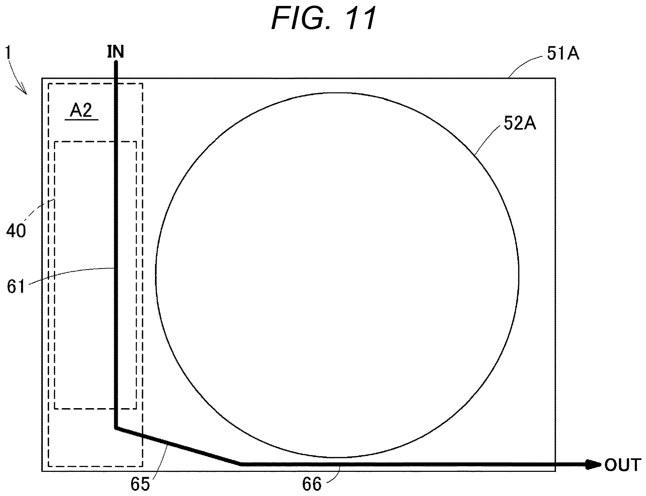

(13) In the second embodiment described above, the configuration in which the second accommodating chamber A2 is adjacent to and above the peripheral wall 52A of the case body portion 51A is described as an example. However, the disclosure is not limited to such a configuration, and for example, as shown in FIG. 11, the second accommodating chamber A2 may be adjacent to a lateral side of the case body portion 51A with respect to the peripheral wall 52A.

(13) In each of the embodiments described above, the configuration in which the power transmission mechanism 20 includes the counter gear mechanism 21 and the differential gear mechanism 26 is described as an example. However, the disclosure is not limited to such a configuration, and the power transmission mechanism 20 may include, for example, a speed reducer, a multi-stage transmission, and a non-stage transmission. In this case, the vehicle driving device 1 is not limited to the three-axis configuration as in the present embodiment, and may have a uniaxial configuration, a biaxial configuration, or a configuration having four or more axes.

(14) The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

### Summary of Embodiments

In summary, the vehicle driving device according to the disclosure preferably includes the following configurations.

A vehicle driving device (1) includes:
a rotary electrical machine (10);
an output member (30) configured to be drivingly coupled to a wheel (W);
a power transmission mechanism (20) configured to transmit a driving force between the rotary electrical machine (10) and the output member (30);
an inverter module (40) configured to control driving of the rotary electrical machine (10); and
a case (50) configured to accommodate the rotary electrical machine (10), the power transmission mechanism (20), and the inverter module (40), in which
the case (50) includes a first accommodating chamber (A1) in which the rotary electrical machine (10) is accommodated, a second accommodating chamber (A2) in which the inverter module (40) is accommodated, and a division wall (58, 52B) dividing the first accommodating chamber (A1) and the second accommodating chamber (A2),
an oil storage portion (R1) configured to store oil is formed in a lower portion of the first accommodating chamber (A1),
a first water passage (61) through which cooling water for cooling the inverter module (40) flows is provided in the second accommodating chamber (A2) or the division wall (58, 52B), and
a second water passage (66) connected to the first water passage (61) is provided in a region facing a lower surface of the rotary electrical machine (10) in the case (50).

According to this configuration, the inverter module (40) can be appropriately cooled by the cooling water flowing through the first water passage (61), and the oil stored in the first oil storage portion (R1) can be cooled by the cooling water flowing from the first water passage (61) to the second water passage (66), and ultimately the rotary electrical machine (10) can be appropriately cooled. Therefore, it is possible to provide the vehicle driving device (1) capable of appropriately cooling both the rotary electrical machine (10) and the inverter module (40).

In one aspect,
the case (50) preferably includes a case body portion (51A), the case body portion constituting at least a part of the first accommodating chamber (A1) and including an opening portion (51b) that opens in an axial direction (L), and a cover portion (59A) that is joined to the case body portion (51A) to cover the opening portion (51b), the axial direction (L) being a direction along an axial center of the rotary electrical machine (10), and
the second water passage (66) is preferably disposed above a lower end of a joining portion (51C) between the case body portion (51A) and the cover portion (59A).

According to this configuration, the second water passage (66) is provided, so that it is easy to prevent the increase in the size of the vehicle driving device (1) in the upper-lower direction.

In one aspect,
the second accommodating chamber (A2) is preferably adjacent to a peripheral wall (52A) of the case body portion (51A) constituting at least a part of the first accommodating chamber (A1), and
a communication water passage (55) connecting the first water passage (61) and the second water passage (66) is preferably provided along the peripheral wall (52A).

According to this configuration, the cooling water that cools the inverter module (40) when flowing through the first water passage (61) can be guided to the second water passage (66) via a rational path. Accordingly, it is possible to appropriately cool the oil stored in the oil storage portion (R1) and the rotary electrical machine (10) while avoiding the increase in the size of the vehicle driving device (1).

In one aspect,
the second water passage (66) is preferably formed in a labyrinth shape.

According to this configuration, the flow velocity of the cooling water flowing through the second water passage (66) can be increased, the cooling efficiency of the oil stored in the oil storage portion (R1) can be increased, and ultimately the cooling efficiency of the rotary electrical machine (10) can be increased.

In one aspect,
the case (50) preferably includes a first case portion (51) that constitutes at least a part of the first accommodating chamber (A1), and a second case portion (55) that constitutes at least a part of the second accommodating chamber (A2), includes the division wall (58), and is joined to a side surface of the first case portion (51).

According to this configuration, since the second case portion (55) constituting at least a part of the second accommodating chamber (A2) is joined to the side surface of the first case portion (51), it is possible to reduce the size of the vehicle driving device (1) in the upper-lower direction. Accordingly, it is possible to provide the vehicle driving device (1) capable of appropriately cooling the rotary electrical machine (10) and the inverter module (40) while achieving the reduction in the size in the upper-lower direction.

In one aspect,
an oil path (70) through which the oil circulates is preferably provided in the case (50), and
the heat exchanger (80) that performs heat exchange between the cooling water and the oil is preferably disposed in the second accommodating chamber (A2) or formed in the division wall (58, 52B).

According to this configuration, as compared with a configuration in which the heat exchanger (80) is disposed outside the case (50), an external pipe for connecting the case (50) and the heat exchanger (80) is not necessary, and thus a flow path of the cooling water and a flow path of the oil can be simplified.

In one aspect,
the first accommodating chamber (A1) is preferably provided with an intermediate wall (53) that divides a space (H1) in which the rotary electrical machine (10) is accommodated and a space (H2) in which a part of the power transmission mechanism (20) is accommodated.

According to this configuration, the oil is retained in the lower portion of the space (H1) in which the rotary electrical machine (10) is accommodated by the intermediate wall (53), and the oil can be efficiently cooled by the cooling water flowing through the second water passage (66), and ultimately the rotary electrical machine (10) can be efficiently cooled. Further, a suitable oil level height can be individually set for each of the space (H1) in which the rotary electrical machine (10) is accommodated and the space (H2) in which a part of the power transmission mechanism (20) is accommodated.

In one aspect,
a plurality of connection terminals (44) of the inverter module (40) that are connected to the rotary electrical machine (10) are preferably disposed side by side along the division wall (58, 52B).

According to this configuration, it is possible to shorten an electrical connection member for electrically connecting the inverter module (40) and the rotary electrical machine (10).

The vehicle driving device according to the disclosure may achieve at least one of the above-described effects.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle driving device (1) comprising:
a rotary electrical machine (10);
an output member (30) configured to be drivingly coupled to a wheel (W);
a power transmission mechanism (20) configured to transmit a driving force between the rotary electrical machine and the output member;
an inverter module (40) configured to control driving of the rotary electrical machine; and
a case (50) configured to accommodate the rotary electrical machine, the power transmission mechanism, and the inverter module, wherein
the case includes a first accommodating chamber (A1) in which the rotary electrical machine is accommodated, a second accommodating chamber (A2) in which the inverter module is accommodated, and a division wall (58, 52B) dividing the first accommodating chamber and the second accommodating chamber,
an oil storage portion (R1) configured to store oil is formed in a lower portion of the first accommodating chamber,
a first water passage (61) through which cooling water for cooling the inverter module flows is provided in the second accommodating chamber or the division wall, and
a second water passage (66) connected to the first water passage is provided in a region facing a lower surface of the rotary electrical machine in the case.

2. The vehicle driving device according to claim 1, wherein
the case includes a case body portion (51A), the case body portion constituting at least a part of the first accommodating chamber and having an opening portion (51b) that opens in an axial direction, and a cover portion (59A) that is joined to the case body portion to cover the opening portion, the axial direction (L) being a direction along an axial center of the rotary electrical machine, and
the second water passage is disposed above a lower end of a joining portion (51C) between the case body portion and the cover portion.

3. The vehicle driving device according to claim 1 or 2, wherein
the second accommodating chamber is adjacent to a peripheral wall (52A) of a case body portion constituting at least a part of the first accommodating chamber, and
a communication water passage (65) connecting the first water passage and the second water passage is provided along the peripheral wall.

4. The vehicle driving device according to any one of claims 1 to 3, wherein
the second water passage is formed in a labyrinth shape.

5. The vehicle driving device according to claim 1, wherein
the case includes a first case portion (51) that constitutes at least a part of the first accommodating chamber, and a second case portion (55) that constitutes at least a part of the second accommodating chamber, includes the division wall, and is joined to a side surface of the first case portion.

6. The vehicle driving device according to any one of claims 1 to 5, wherein
an oil path (70) through which the oil circulates is provided in the case, and
a heat exchanger (80) that performs heat exchange between the cooling water and the oil is disposed in the second accommodating chamber or formed in the division wall.

7. The vehicle driving device according to any one of claims 1 to 6, wherein
the first accommodating chamber is provided with an intermediate wall (53) that divides a space (H1) in which the rotary electrical machine is accommodated and a space (H2) in which a part of the power transmission mechanism is accommodated.

8. The vehicle driving device according to any one of claims 1 to 7, wherein
a plurality of connection terminals (44) of the inverter module that are connected to the rotary electrical machine are disposed side by side along the division wall.
